# DEMANDE DE BREVET EUROPEEN

(11) **EP 4 851 002 A1**
(43) Date de publication de la demande: **09.12.2026**
(21) Numéro de dépôt: 26181996.5
(22) Date de dépôt: 29.05.2026
(51) Int. Cl.: B60W 40/08

(54) **PROCÉDÉ DE DÉTECTION FIABILISÉE DE LA PRÉSENCE DES MAINS D'UN CONDUCTEUR SUR UN VOLANT D'UN VÉHICULE**

(30) Priorité: 02.06.2025 FR 2505896
(71) Demandeur: RENAULT s.a.s., 92100 Boulogne-Billancourt (FR)
(72) Inventeur: EL HAJ SHHADE, GHAYATH, 78280 GUYANCOURT (FR); ANCORA, ANDREA, 06410 BIOT (FR); RONDEL, Jérémie, 78280 GUYANCOURT (FR)
(74) Mandataire: Renault Group

(57) **Abrégé**

Un aspect de l'invention concerne un procédé de détection fiabilisée de la présence des mains d'un conducteur sur un volant (201) d'un véhicule (200), comportant les étapes suivantes :
- Si chaque condition d'un ensemble de conditions liées au véhicule (200) et/ou au conducteur du véhicule (200) et/ou à un environnement du véhicule (200) est vérifiée, réévaluation d'un coefficient de friction d'une direction du véhicule (200) pour obtenir une nouvelle valeur de coefficient de friction, une valeur de coefficient de friction étant initialement enregistrée dans une mémoire du véhicule (200) ;
- Mise à jour de la valeur du coefficient de friction enregistrée avec la nouvelle valeur de coefficient de friction ;
- Détection à l'aide un capteur de couple (202), de la présence des mains du conducteur sur le volant (201) du véhicule (200), le capteur de couple (202) utilisant la valeur du coefficient de friction enregistrée.

## Description

### DOMAINE TECHNIQUE DE L'INVENTION

Le domaine technique de l'invention est celui des fonctions de sécurité dans les véhicules, et plus particulièrement celui des fonctions de détection de la présence des mains d'un conducteur sur un volant de véhicule.

La présente invention concerne un procédé de détection de la présence des mains d'un conducteur sur un volant d'un véhicule et en particulier un procédé de détection fiabilisée de la présence des mains d'un conducteur sur un volant d'un véhicule. L'invention concerne également un véhicule et un produit-programme d'ordinateur pour la mise en œuvre du procédé.

### ARRIERE-PLAN TECHNOLOGIQUE DE L'INVENTION

Pour s'assurer de la vigilance et de la capacité à conduire du conducteur d'un véhicule, de plus en plus de véhicules sont équipés d'un système de détection des mains du conducteur sur le volant du véhicule qui génère des alertes quand le conducteur reste trop longtemps sans mettre les mains sur le volant. Parmi les technologies utilisées pour réaliser une telle détection, les capteurs de couple permettent de détecter la présence des mains du conducteur sur le volant quand ce dernier exerce un couple sur la direction du véhicule. Si cette détection est assez simple en virage, elle est toutefois beaucoup plus compliquée en ligne droite où il est beaucoup plus difficile de détecter le couple résiduel qu'exerce le conducteur sur le volant. De tels capteurs génèrent donc de nombreux faux positifs entraînant l'émission d'alertes non justifiées. Pour améliorer la précision de détection, le capteur de couple est étalonné en usine avec une valeur de coefficient de friction prenant en compte les dispersions des différents éléments qui composent le système de direction du véhicule et qui sont situés entre le capteur de couple et le volant. Cependant, une telle valeur est susceptible d'évoluer au cours de la vie du véhicule, notamment de par le vieillissement des différents composants de la direction, et le protocole permettant de déterminer cette valeur est mis en œuvre sur banc d'essai et donc non applicable en roulage. La précision de détection du capteur de couple diminue donc avec le temps.

Des solutions proposent d'utiliser une caméra intérieure du véhicule pour valider/invalider la détection réalisée par le capteur de couple, mais de telles caméras ont des angles de vision insuffisants pour couvrir toute la superficie des volants et tous les réglages des conducteurs.

Il existe donc un besoin d'améliorer la précision de la détection de la présence des mains du conducteur sur le volant d'un véhicule via un capteur de couple.

### RESUME DE L'INVENTION

L'invention offre une solution aux problèmes évoqués précédemment, en permettant de rendre plus fiable la détection de la présence des mains du conducteur sur le volant d'un véhicule.

Un premier aspect de l'invention concerne un procédé de détection fiabilisée de la présence des mains d'un conducteur sur un volant d'un véhicule, comportant les étapes suivantes :
- Si chaque condition d'un ensemble de conditions liées au véhicule et/ou au conducteur du véhicule et/ou à un environnement du véhicule est vérifiée, réévaluation d'un coefficient de friction d'une direction du véhicule pour obtenir une nouvelle valeur de coefficient de friction, une valeur de coefficient de friction étant initialement enregistrée dans une mémoire du véhicule ;
- Mise à jour de la valeur du coefficient de friction enregistrée avec la nouvelle valeur de coefficient de friction ;
- Détection à l'aide un capteur de couple, de la présence des mains du conducteur sur le volant du véhicule, le capteur de couple utilisant la valeur du coefficient de friction enregistrée.

Grâce à l'invention, le coefficient de friction de la direction du véhicule est réévalué tout au long de la vie du véhicule pour prendre en compte le vieillissement des composants de la direction du véhicule, ce qui permet d'améliorer la précision de la mesure du couple exercé par le conducteur sur le volant par le capteur de couple. Le nombre de fausses détections de non-présence des mains du conducteur sur le volant est ainsi réduit, ce qui évite l'émission d'alertes intempestives.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles.

Selon une variante de réalisation, l'étape de réévaluation comporte les sous-étapes suivantes :
- A partir d'une position initiale du volant, premier braquage du volant dans un premier sens pour atteindre une première valeur d'angle de braquage, et pour une pluralité de valeurs d'angle de braquage parcourues lors du premier braquage, mesure par le capteur de couple, d'une valeur de couple associée à ladite valeur d'angle ;
- Deuxième braquage du volant dans un deuxième sens pour atteindre une deuxième valeur d'angle de braquage, et pour une pluralité de valeurs d'angle de braquage parcourues lors du deuxième braquage, mesure par le capteur de couple, d'une valeur de couple associée à ladite valeur d'angle ;
- Troisième braquage du volant dans le premier sens pour atteindre la position initiale du volant, et pour une pluralité de valeurs d'angle de braquage parcourues lors du troisième braquage, mesure par le capteur de couple, d'une valeur de couple associée à ladite valeur d'angle ;
- Calculer la nouvelle valeur du coefficient de friction à partir des valeurs de couple mesurées.

Selon une variante de réalisation compatible avec la variante de réalisation précédente, l'ensemble de conditions comporte une condition selon laquelle le véhicule a parcouru un premier nombre prédéfini de kilomètres depuis une dernière mise à jour de la valeur du coefficient de friction enregistrée et/ou une condition selon laquelle pour un deuxième nombre prédéfini de kilomètres parcourus, le nombre de fois où le capteur de couple a détecté que le conducteur n'avait pas ses mains sur le volant pendant au moins une durée prédéfinie, et qu'une caméra intérieure du véhicule détectait que le conducteur avait bien ses mains sur le volant, est supérieur à un seuil de détections contradictoires.

Ainsi, le coefficient de friction est réévalué quand le véhicule a parcouru un certain nombre de kilomètres depuis la dernière évaluation du coefficient de friction, et/ou quand un nombre trop important de détections contradictoires entre le capteur de couple et la caméra intérieure est relevé sur une plage donnée de kilomètres parcourus.

Selon une variante de réalisation compatible avec les variantes de réalisation précédentes, l'ensemble de conditions comporte une condition selon laquelle le capteur de couple détecte que le conducteur n'a pas ses mains sur le volant, et une condition selon laquelle une caméra intérieure du véhicule détecte que le conducteur n'a pas ses mains sur le volant, et une condition selon laquelle une fonction d'aide au stationnement est active, l'étape de réévaluation étant mise en œuvre automatiquement par la fonction d'aide au stationnement.

Ainsi, le coefficient de friction est réévalué sans intervention du conducteur par une fonction d'aide au stationnement quand le conducteur n'a pas ses mains sur le volant.

Selon une variante de réalisation compatible avec les variantes de réalisation précédentes excepté la variante de réalisation précédente, l'ensemble de conditions comporte une condition selon laquelle le capteur de couple détecte que le conducteur a ses mains sur le volant, et une condition selon laquelle une caméra intérieure du véhicule détecte que le conducteur a ses mains sur le volant, et une condition selon laquelle un angle entre une position actuelle du volant et une position de référence du volant est inférieur à un seuil d'angle prédéfini, l'étape de réévaluation étant mise en œuvre par le conducteur.

Ainsi, le coefficient de friction est réévalué à l'occasion d'une manœuvre réalisée par le conducteur.

Selon une variante de réalisation compatible avec les variantes de réalisation précédentes, l'ensemble de conditions comporte une condition selon laquelle un coefficient d'adhérence d'une route sur laquelle circule le véhicule est compris dans un intervalle prédéfini de coefficients d'adhérence, une condition selon laquelle une vitesse du véhicule est inférieure à un seuil de vitesse prédéfini, et une condition selon laquelle un angle de dévers de la route sur laquelle circule le véhicule est compris dans un intervalle prédéfini d'angles de dévers.

Ainsi, le coefficient de friction est réévalué dans un environnement minimisant les contraintes exercées sur la direction du véhicule pour ne pas fausser la réévaluation.

Selon une variante de réalisation compatible avec les variantes de réalisation précédentes, le procédé selon l'invention comporte une étape d'alerte du conducteur si la nouvelle valeur de coefficient de friction est supérieure à un seuil de valeur prédéfini.

Ainsi, le conducteur est alerté si les dispersions des différents éléments qui composent le système de direction du véhicule sont trop importantes.

Selon une variante de réalisation compatible avec les variantes de réalisation précédentes, l'étape de mise à jour n'est réalisée que si la nouvelle valeur de coefficient de friction est inférieure à un seuil de valeur prédéfini.

Un deuxième aspect de l'invention concerne un véhicule comportant des moyens pour mettre en œuvre le procédé selon l'invention.

Un troisième aspect de l'invention concerne un produit programme d'ordinateur comprenant des instructions qui, lorsque le programme est exécuté par un ordinateur, conduisent celui-ci à mettre en œuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 montre une représentation schématique d'un habitacle d'un véhicule selon l'invention.
- La figure 3 montre un graphe représentant un angle entre une position actuelle d'un volant et une position initiale du volant, en fonction du temps lors d'une étape de réévaluation du procédé selon l'invention.

### DESCRIPTION DETAILLEE

Sauf précision contraire, un même élément apparaissant sur des figures différentes présente une référence unique.

L'invention concerne un procédé permettant de détecter la présence des mains d'un conducteur d'un véhicule sur un volant du véhicule, de manière plus fiable, c'est-à-dire plus précise.

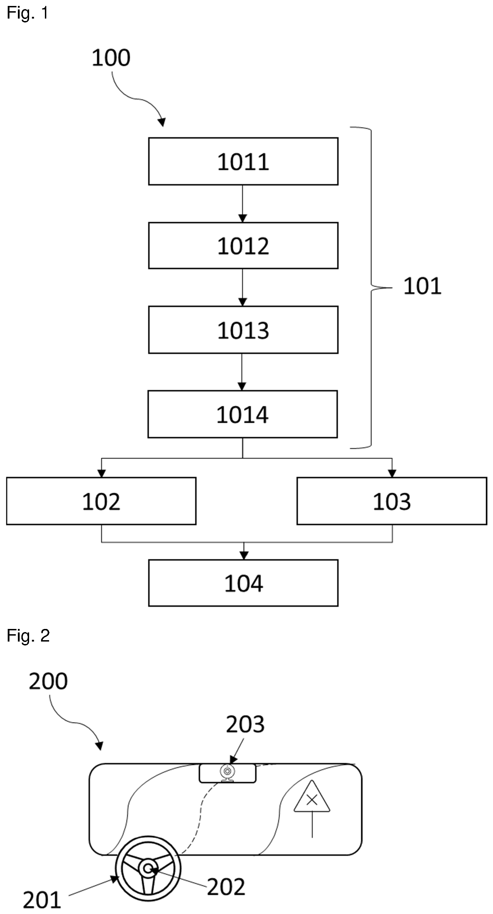

L'enchaînement des étapes du procédé 100 est illustré sur la figure 1 et une représentation schématique d'un habitacle du véhicule 200 du point de vue du conducteur est illustré sur la figure 2.

Le véhicule 200 est par exemple un véhicule automobile, tel qu'une voiture, un camion ou une moto, circulant sur une route.

Le véhicule 200 est équipé d'un capteur de couple 202 configuré pour mesurer le couple exercé par le conducteur sur le volant 201.

Pour réaliser une mesure de couple, le capteur de couple 202 utilise une valeur de coefficient de friction enregistrée dans une mémoire du véhicule 200.

Le coefficient de friction permet au capteur de couple 202 de prendre en compte les dispersions des différents éléments qui composent un système de direction du véhicule 200, qui sont situés entre le capteur de couple 202 et le volant 201 pour sa mesure de couple.

La valeur de coefficient de friction est initialement enregistrée en usine, après mise en œuvre d'un protocole particulier sur banc d'essai pour estimer sa valeur.

Une première étape 101 du procédé 100 selon l'invention consiste à réestimer la valeur du coefficient de friction.

La première étape 101 n'est réalisée que si un ensemble de conditions est vérifié. L'ensemble de conditions comporte au moins une condition liée au véhicule 200 et/ou au moins une condition liée au conducteur du véhicule 200 et/ou au moins une condition liée à un environnement du véhicule 200.

L'ensemble de conditions comporte par exemple un sous-ensemble de conditions représentatif de situations dans lesquelles il serait opportun voire nécessaire de réévaluer le coefficient de friction, et un sous-ensemble de conditions correspondant aux conditions nécessaires à la mise en œuvre de la réévaluation.

L'ensemble de conditions comporte par exemple une condition selon laquelle le véhicule 200 a parcouru un premier nombre prédéfini de kilomètres depuis une dernière mise à jour de la valeur du coefficient de friction enregistrée, c'est-à-dire depuis l'enregistrement de la valeur du coefficient de friction initiale en usine ou consécutivement à une mise en œuvre antérieure de la première étape 101, et/ou une condition selon laquelle, pour un deuxième nombre prédéfini de kilomètres parcourus, le nombre de fois où le capteur de couple 202 a détecté que le conducteur n'avait pas ses mains sur le volant 201 pendant au moins une durée prédéfinie, et qu'une caméra intérieure 203 du véhicule 200 détectait que le conducteur avait bien ses mains sur le volant 201, est supérieur à un seuil de détections contradictoires.

Le premier nombre prédéfini de kilomètres vaut par exemple 100 000 kilomètres.

Le deuxième nombre prédéfini de kilomètres vaut par exemple 200 kilomètres.

La durée prédéfinie vaut par exemple 5 secondes.

Le seuil de détections contradictoires vaut par exemple 5.

L'ensemble de conditions comporte par exemple une condition selon laquelle un coefficient d'adhérence de la route sur laquelle circule le véhicule 200 est compris dans un intervalle prédéfini de coefficients d'adhérence, une condition selon laquelle une vitesse du véhicule 200 est inférieure à un seuil de vitesse prédéfini, et une condition selon laquelle un angle de dévers de la route sur laquelle circule le véhicule 200 est compris dans un intervalle prédéfini d'angles de dévers.

L'intervalle prédéfini de coefficients d'adhérence est par exemple ]0.7 ; 1[.

Le seuil de vitesse prédéfini est par exemple 5 km/h.

L'intervalle prédéfini d'angles de dévers est par exemple [0 ; |1|°[.

Selon un premier mode de réalisation, l'ensemble de conditions comporte par exemple une condition selon laquelle le capteur de couple 202 détecte que le conducteur n'a pas ses mains sur le volant 201, une condition selon laquelle une caméra intérieure 203 du véhicule 200 détecte que le conducteur n'a pas ses mains sur le volant 201 et une condition selon laquelle une fonction d'aide au stationnement est active.

La fonction d'aide au stationnement est par exemple la fonction implémentée sur le véhicule 200, permettant au véhicule 200 de se garer automatiquement sur une place de stationnement, c'est-à-dire sans intervention du conducteur du véhicule 200.

Dans le premier mode de réalisation, la première étape 101 est mise en œuvre automatiquement, c'est-à-dire sans intervention du conducteur, par la fonction d'aide au stationnement.

Selon un deuxième mode de réalisation, l'ensemble de conditions comporte une condition selon laquelle le capteur de couple 202 détecte que le conducteur a ses mains sur le volant 201, une condition selon laquelle la caméra intérieure 203 du véhicule 200 détecte que le conducteur a ses mains sur le volant 201, et une condition selon laquelle un angle entre une position actuelle du volant 201 et une position de référence du volant 201 est inférieur à un seuil d'angle prédéfini.

La position de référence du volant 201 correspond par exemple à une position correspondant à un véhicule 200 présentant des roues droites.

Le seuil d'angle prédéfini vaut par exemple 180°.

Dans le deuxième mode de réalisation, la première étape 101 est mise en œuvre par le conducteur, par exemple à l'occasion d'une manœuvre réalisée par le conducteur.

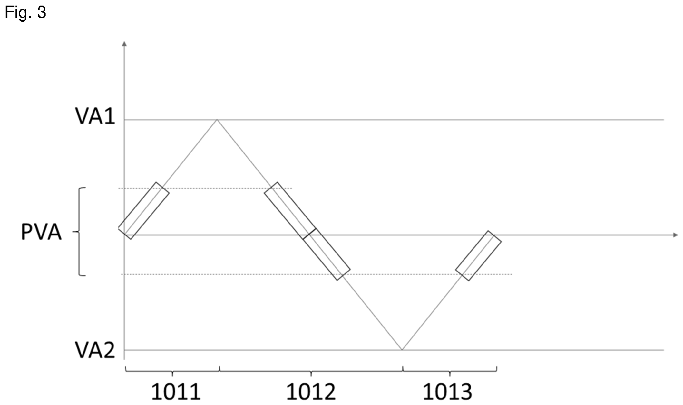

A l'initiation de la première étape 101, le volant 201 est dans une position initiale et l'angle entre une position actuelle du volant 201 et la position initiale du volant 201 lors de la première étape 101 est représenté sur la figure 3, en fonction du temps.

La position initiale du volant 201 correspond par exemple à une position correspondant à un véhicule 200 présentant des roues droites.

Une première sous-étape 1011 consiste à braquer le volant 201 dans un premier sens jusqu'à atteindre une première valeur d'angle de braquage VA1 et à mesurer à l'aide du capteur de couple 202, une valeur de couple pour chaque valeur d'angle d'une pluralité de valeurs d'angle de braquage PVA parcourues lors dudit braquage.

Chaque valeur d'angle de braquage est définie par rapport à la position initiale du volant 201, c'est-à-dire que la valeur d'angle de braquage est nulle quand le volant 201 est dans la position initiale.

La première valeur d'angle de braquage VA1 vaut par exemple 180°.

Une deuxième sous-étape 1012 consiste à braquer le volant 201 dans un deuxième sens jusqu'à atteindre une deuxième valeur d'angle de braquage VA2 et à mesurer à l'aide du capteur de couple 202, une valeur de couple pour chaque valeur d'angle d'une pluralité de valeurs d'angle de braquage PVA parcourues lors dudit braquage.

La valeur absolue de la deuxième valeur d'angle de braquage VA2 est par exemple égale à la valeur absolue de la première valeur d'angle de braquage VA1.

La deuxième valeur d'angle de braquage VA2 vaut par exemple -180°.

Une troisième sous-étape 1013 consiste à braquer le volant 201 dans le premier sens jusqu'à retourner à la position initiale du volant 201 et à mesurer à l'aide du capteur de couple 202, une valeur de couple pour chaque valeur d'angle d'une pluralité de valeurs d'angle de braquage PVA parcourues lors dudit braquage.

Le premier sens est par exemple le sens horaire, respectivement antihoraire, et le deuxième sens est par exemple le sens antihoraire, respectivement horaire.

La pluralité de valeurs d'angle de braquage PVA correspond par exemple à une pluralité de valeurs d'angle de braquage comprises dans un intervalle de valeurs d'angle prédéfini.

L'intervalle de valeurs d'angle prédéfini est par exemple [-5°; 5°].

Sur la figure 3 sont entourées les plages de valeurs d'angle pour lesquelles des mesures de couple sont réalisées lors des première sous-étape 1011, deuxième sous-étape 1012 et troisième sous-étape 1013.

Une quatrième sous-étape 1014 consiste à calculer une nouvelle valeur du coefficient de friction à partir des valeurs de couple mesurées lors des première sous-étape 1011, deuxième sous-étape 1012 et troisième sous-étape 1013.

Classiquement, le coefficient de friction est fonction d'une différence entre la valeur moyenne de couple obtenue à partir des valeurs de couple mesurées pour les valeurs d'angle de braquage parcourues lors d'un braquage effectué dans le premier sens et la valeur moyenne de couple obtenue à partir des valeurs de couple mesurées pour les valeurs d'angle de braquage parcourues lors d'un braquage effectué dans le deuxième sens, et d'une fonction connue dépendant de la température extérieure.

Une deuxième étape 102 du procédé 100 selon l'invention consiste à mettre à jour la valeur du coefficient de friction enregistrée, avec la nouvelle valeur de coefficient de friction réestimée lors de la première étape 101.

La deuxième étape 102 n'est par exemple réalisée que si la nouvelle valeur de coefficient de friction est inférieure à un seuil de valeur prédéfini.

Le seuil de valeur prédéfini vaut par exemple 0.9 Nm.

Le procédé 100 selon l'invention peut comporter une troisième étape 103 consistant à alerter le conducteur.

Le conducteur est par exemple alerté par l'affichage d'un message d'alerte sur un écran du véhicule 200 et/ou par l'émission d'un message d'alerte vocal via un haut-parleur du véhicule 200.

Le message d'alerte indique par exemple au conducteur de prévoir une visite au garage.

La troisième étape 103 n'est réalisée que si la nouvelle valeur de coefficient de friction est supérieure ou égale au seuil de valeur prédéfini.

Une quatrième étape 104 du procédé 100 selon l'invention consiste à détecter la présence des mains du conducteur sur le volant 201 du véhicule 200, via une mesure de couple réalisée par le capteur de couple 202 utilisant la valeur du coefficient de friction enregistrée.

## Revendications

1. Procédé (100) de détection fiabilisée de la présence des mains d'un conducteur sur un volant (201) d'un véhicule (200), comportant les étapes suivantes :
- Si chaque condition d'un ensemble de conditions liées au véhicule (200) et/ou au conducteur du véhicule (200) et/ou à un environnement du véhicule (200) est vérifiée, réévaluation (101) d'un coefficient de friction d'une direction du véhicule (200) pour obtenir une nouvelle valeur de coefficient de friction, une valeur de coefficient de friction étant initialement enregistrée dans une mémoire du véhicule (200) ;
- Mise à jour (102) de la valeur du coefficient de friction enregistrée avec la nouvelle valeur de coefficient de friction ;
- Détection (104) à l'aide un capteur de couple (202), de la présence des mains du conducteur sur le volant (201) du véhicule (200), le capteur de couple (202) utilisant la valeur du coefficient de friction enregistrée ;
l'ensemble de conditions comportant une condition selon laquelle le capteur de couple (202) détecte que le conducteur n'a pas ses mains sur le volant (201), et une condition selon laquelle une caméra intérieure (203) du véhicule (200) détecte que le conducteur n'a pas ses mains sur le volant (201), et une condition selon laquelle une fonction d'aide au stationnement est active, l'étape (101) de réévaluation étant mise en œuvre automatiquement par la fonction d'aide au stationnement, ou
l'ensemble de conditions comportant une condition selon laquelle le capteur de couple (202) détecte que le conducteur a ses mains sur le volant (201), et une condition selon laquelle une caméra intérieure (203) du véhicule (200) détecte que le conducteur a ses mains sur le volant (201), et une condition selon laquelle un angle entre une position actuelle du volant (201) et une position de référence du volant (201) est inférieur à un seuil d'angle prédéfini, l'étape (101) de réévaluation étant mise en œuvre par le conducteur.

2. Procédé (100) selon la revendication précédente, dans lequel l'étape (101) de réévaluation comporte les sous-étapes suivantes :
- A partir d'une position initiale du volant (201), premier braquage du volant (201) dans un premier sens pour atteindre une première valeur d'angle de braquage (VA1), et pour une pluralité de valeurs d'angle (PVA) de braquage parcourues lors du premier braquage, mesure par le capteur de couple (202), d'une valeur de couple associée à ladite valeur d'angle (1011) ;
- Deuxième braquage du volant (201) dans un deuxième sens pour atteindre une deuxième valeur d'angle de braquage (VA2), et pour une pluralité de valeurs d'angle de braquage parcourues (PVA) lors du deuxième braquage, mesure par le capteur de couple (202), d'une valeur de couple associée à ladite valeur d'angle (1012) ;
- Troisième braquage du volant (201) dans le premier sens pour atteindre la position initiale du volant (201), et pour une pluralité de valeurs d'angle de braquage parcourues (PVA) lors du troisième braquage, mesure par le capteur de couple (202), d'une valeur de couple associée à ladite valeur d'angle (1013) ;
- Calculer (1014) la nouvelle valeur du coefficient de friction à partir des valeurs de couple mesurées.

3. Procédé (100) selon l'une quelconque des revendications précédentes, dans lequel l'ensemble de conditions comporte une condition selon laquelle le véhicule (200) a parcouru un premier nombre prédéfini de kilomètres depuis une dernière mise à jour de la valeur du coefficient de friction enregistrée et/ou une condition selon laquelle pour un deuxième nombre prédéfini de kilomètres parcourus, le nombre de fois où le capteur de couple (202) a détecté que le conducteur n'avait pas ses mains sur le volant (201) pendant au moins une durée prédéfinie, et qu'une caméra intérieure (203) du véhicule (200) détectait que le conducteur avait bien ses mains sur le volant (201), est supérieur à un seuil de détections contradictoires.

4. Procédé (100) selon l'une quelconque des revendications précédentes, dans lequel l'ensemble de conditions comporte une condition selon laquelle un coefficient d'adhérence d'une route sur laquelle circule le véhicule (200) est compris dans un intervalle prédéfini de coefficients d'adhérence, une condition selon laquelle une vitesse du véhicule (200) est inférieure à un seuil de vitesse prédéfini, et une condition selon laquelle un angle de dévers de la route sur laquelle circule le véhicule (200) est compris dans un intervalle prédéfini d'angles de dévers.

5. Procédé (100) selon l'une quelconque des revendications précédentes, comportant une étape (103) d'alerte (1022) du conducteur si la nouvelle valeur de coefficient de friction est supérieure à un seuil de valeur prédéfini.

6. Procédé (100) selon l'une quelconque des revendications précédentes, dans lequel l'étape (102) de mise à jour n'est réalisée que si la nouvelle valeur de coefficient de friction est inférieure à un seuil de valeur prédéfini.

7. Véhicule (200) comportant des moyens pour mettre en œuvre le procédé (100) selon l'une quelconque des revendications précédentes.

8. Produit programme d'ordinateur comprenant des instructions qui, lorsque le programme est exécuté par un ordinateur, conduisent celui-ci à mettre en œuvre les étapes du procédé (100) selon l'une quelconque des revendications 1 à 6.
